# EUROPEAN PATENT SPECIFICATION

(11) **EP 3 866 552 B1**
(45) Date of publication and mention of the grant of the patent: **28.09.2022**
(21) Application number: 20157742.6
(22) Date of filing: 17.02.2020
(51) Int. Cl.: H04W 48/16, H04W 76/11, H04W 12/08, H04W 8/06, H04W 48/18, H04W 8/18

(54) **COMMUNICATION TERMINAL, METHOD FOR CONFIGURING A COMMUNICATION TERMINAL, ACCESS MANAGEMENT COMPONENT AND METHOD FOR ACCESS MANAGEMENT OF A NON-PUBLIC NETWORK**
KOMMUNIKATIONSENDGERÄT, VERFAHREN ZUR KONFIGURATION EINES KOMMUNIKATIONSENDGERÄTS, ZUGRIFFSVERWALTUNGSKOMPONENTEN UND VERFAHREN ZUR ZUGANGSVERWALTUNG EINES NICHTÖFFENTLICHEN NETZWERKS
TERMINAL DE COMMUNICATION, PROCÉDÉ DE CONFIGURATION D'UN TERMINAL DE COMMUNICATION, COMPOSANT DE GESTION D'ACCÈS ET PROCÉDÉ POUR LA GESTION D'ACCÈS D'UN RÉSEAU NON PUBLIC

(43) Date of publication of application: 18.08.2021
(73) Proprietor: NTT DoCoMo, Inc., Tokyo 100-6150 (JP)
(72) Inventor: SAMA, Malla Reddy, 80687 München (DE); MINOKUCHI, Atsushi, Tokyo 100-6150 (JP); AOYAGI, Kenichiro, Tokyo 100-6150 (JP); AL-BAKRI, Ban, Tokyo 100-6150 (JP)
(74) Representative: Viering, Jentschura & Partner mbB Patent- und Rechtsanwälte

(56) References cited:
- CN-A- 110 536 293
- US-A1- 2020 053 643
- CHINA TELECOM: "Solution for UE onboarding and remote provisioning for a PNI-NPN", 3GPP DRAFT; S2-2000452, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Incheon, Korea; 20200113 - 20200117 7 January 2020 (2020-01-07), XP051842519, Retrieved from the Internet: URL:https://ftp.3gpp.org/tsg_sa/WG2_Arch/T SGS2_136AH_Incheon/Docs/S2-2000452.zip S2-2000452 Solution for UE Onboarding and remote provisioning for a PNI-NPN.doc [retrieved on 2020-01-07]
- "3rd Generation Partnership Project; Technical Specification Group Services and System Aspects; Study on enhanced support of Non-Public Networks (Release 17)", 3GPP DRAFT; 23700-07-030, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 28 January 2020 (2020-01-28), XP051845689, Retrieved from the Internet: URL:https://ftp.3gpp.org/tsg_sa/WG2_Arch/L atest_SA2_Specs/Latest_draft_S2_Specs/2370 0-07-030.zip 23700-07-030_rm.docx [retrieved on 2020-01-28]
- HUAWEI ET AL: "New Solution UE onboarding and provisioning for SNPN subscription", 3GPP DRAFT; S2-2000645, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Incheon, South Korea; 20200113 - 20200117 7 January 2020 (2020-01-07), XP051842702, Retrieved from the Internet: URL:https://ftp.3gpp.org/tsg_sa/WG2_Arch/T SGS2_136AH_Incheon/Docs/S2-2000645.zip S2-2000645 pCR New Solution UE onboarding and provisioning for SNPN subscription_final.doc [retrieved on 2020-01-07]
- TENCENT: "Solution for Key Issue#2: User subscription data provisioning for SNPN UEs", 3GPP DRAFT; S2-2000602, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Incheon, Korea; 20200113 - 20200117 7 January 2020 (2020-01-07), XP051842660, Retrieved from the Internet: URL:https://ftp.3gpp.org/tsg_sa/WG2_Arch/T SGS2_136AH_Incheon/Docs/S2-2000602.zip S2-2000602-eNPN- Provisioning for SNPN UEs.doc [retrieved on 2020-01-07]

## Description

### FIELD OF THE INVENTION

The present disclosure relates to a communication terminal and a method for configuring a communication terminal with regard to non-public network (NPN) access and usage.

### BACKGROUND

It is planned that for 5G (Fifth Generation) mobile communication, non-public networks may be deployed. A 5G non-public network (NPN) is a 5GS (5G communication system) deployed for non-public use (e.g. deployed by an enterprise for its members of the enterprise). An NPN may be deployed as standalone NPN (SNPN) which means that the NPN is not relying on network functions provided by a PLMN (Public Land Mobile Network) or as a Public Network Integrated NPN (PNI-NPN), which means that the NPN is deployed with the support of a PLMN.

Per definition, the group (or groups) of communication terminals which may access an NPN (i.e. the NPN's access group or access groups) is limited. A communication terminal which does not know that it may access an NPN will typically not access the NPN to avoid congestion due to unnecessary registration requests (i.e. registration requests which will be denied anyway). However, this may lead, e.g. due to erroneous configuration of a communication terminal, to the situation in which a communication terminal avoids accessing an NPN even if it has the right to do so.

Accordingly, efficient approaches for NPN access management and configuration of a communication terminal with regard to NPN usage are desirable.

Document CN 110 536 293 A discloses a method, device and system for accessing a closed access group, CAG, wherein the method for accessing the closed access group comprises the steps of carrying out the encryption of a CAG ID requested to be accessed, obtaining an encrypted CAG ID requested to be accessed, and sending a registration request message, wherein the registration request message comprises the encrypted CAG ID requested to be accessed and the Subscription Concealed Identifier, SUCI, of the terminal.

Document "Solution for UE onboarding and remote provisioning for a PNI-NPN" from China Telecom, 3GPP Draft, S2-2000452, from the SA WG2 Meeting #S2-136AH of 13-17 January 2020, in Incheon, Korea, discloses a proposal for a solution for UE onboarding and remote provisioning for a public integrated non-public network, PNI-NPN. The disclosed procedure includes the UE discovering a PNI-NPN cell supporting UE onboarding and remote provisioning but only identifying the subscription for the PLMN (to which the PNI-NPN belongs to), the UE registering to the network by sending a registration request to the AMF with a Subscription Concealed Identifier, SUCI, for PLMN and an indication for UE onboarding and remote provisioning. The AMF then initiates authentication and security procedures (and retrieves UE Subscription for PNI-NPN from the UDM) and, in case the UE has no subscription or is not allowed access to the PNI-NPN, the AMF sends a Registration Reject to the UE, and, in case the UE subscription indicates that it is allowed access to the current PNI-NPN cell, the AMF sends a Registration Accept to the UE.

### SUMMARY According to the present invention

a communication terminal is provided including a memory for storing a list of identifications of access groups to which the communication terminal belongs, wherein each access group has access to one or more non-public networks, a transceiver configured to request registration and establish a connection with a non-public network even if the memory does not store an indication of an access group which has access to the non-public network as an access group to which the communication terminal belongs and receive, from the non-public network, a notification that the communication terminal belongs to a group of communication terminals that have access to the non-public network and a controller configured to store an indication, received from the non-public network, of the group of communication terminals that have access to the non-public network in the list of identifications in the memory.

Additionally, a method for configuring a communication terminal is provided.

### BRIEF DESCRIPTION OF DRAWINGS

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a radio communication system.
- Figure 2: shows a public integrated non-public network (PNI-NPN).
- Figure 3: shows a Stand-alone non-public network (SNPN).
- Figure 4: illustrates a use case of an NPN.
- Figure 5: shows an example for a communication terminal in the coverage area of a radio access network PNI-NPN.
- Figure 6: shows another example for a communication terminal in the coverage area of a radio access network PNI-NPN.
- Figure 7: shows a message flow diagram according to an embodiment.
- Figure 8: shows a message flow diagram according to an embodiment for an example of provision of a temporary Allowed CAG (Closed Access Group) list.
- Figure 9: shows a communication terminal according to an embodiment of the invention.
- Figure 10: shows a flow diagram illustrating a method for configuring a communication terminal according to an embodiment of the invention.
- Figure 11: shows an access management component of a non-public network.
- Figure 12: shows a flow diagram illustrating a method for access management of a non-public network.

### DETAILED DESCRIPTION

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

In the following, there is provided an access management component of a non-public network including a controller configured to transmit, to a home network of a communication terminal located in a radio cell of the non-public network, a request for information whether the communication terminal belongs to a group of communication terminals that have access to the non-public network and, if the communication terminal belongs to a group of communication terminals that have access to the non-public network, transmit a notification to the communication terminal that the communication terminal belongs to a group of communication terminals that have access to the non-public network.

The controller of the access management component may further be configured to transmit the request in reaction to the reception of a request for access information of the non-public network from the communication terminal.

The controller of the access management component may further be configured to, in reaction to the reception of the information from the home network that the communication terminal temporarily belongs to a group of communication terminals that have access to the non-public network, notify the home network to store that the communication terminal permanently belongs to a group of communication terminals that have access to the non-public network.

The access management component may further provide that the request for information whether the communication terminal belongs to a group of communication terminals that have access to the non-public network is a request for subscription information of the home network.

The controller of the access management component may further be configured to transmit the request in reaction to the reception of a request for access information of the non-public network from the communication terminal and, if the communication terminal does not belong to a group of communication terminals that have access to the non-public network, initiate a rejection of the request with a rejection cause indicating that the non-public network does not support a service (e.g. service provision) for the communication terminal.

The controller of the access management component may further be configured to initiate the rejection in response to an instruction by a Unified Data Management of the home network and/or local policy of an access management component.

The provided access management component may further be at least partially implemented by a radio access network component and/or an Access and Mobility Management Function.

In the following, various examples will be described in more detail.

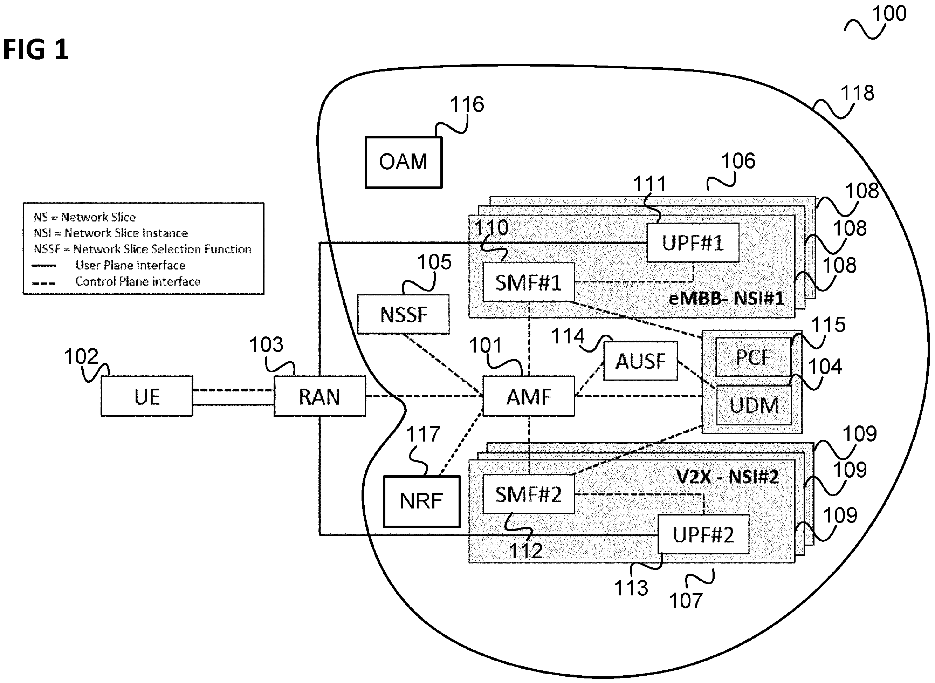

Figure 1 shows a radio communication system 100.

The radio communication system 100 includes a mobile radio terminal device 102 such as a UE (user equipment), a nano equipment (NE), and the like. The mobile radio terminal device 102, also referred to as subscriber terminal, forms the terminal side while the other components of the radio communication system 100 described in the following are part of the mobile radio communication network side, i.e. part of a mobile radio communication network (e.g. a Public Land Mobile Network PLMN).

Furthermore, the radio communication system 100 includes a radio access network 103, which may include a plurality of radio access network nodes, i.e. base stations configured to provide radio access in accordance with a 5G (Fifth Generation) radio access technology (5G New Radio). It should be noted that the radio communication system 100 may also be configured in accordance with LTE (Long Term Evolution) or another radio communication standard but 5G is herein used as an example. Each radio access network node may provide a radio communication with the mobile radio terminal device 102 over an air interface. It should be noted that the radio access network 103 may include any number of radio access network nodes.

The radio communication system 100 further includes a core network 118 including an Access and Mobility Management Function (AMF) 101 connected to the RAN 103, a Unified Data Management (UDM) 104 and a Network Slice Selection Function (NSSF) 105. Here and in the following examples, the UDM may further consist of the actual UE's subscription database, which is known as, for example, the UDR (Unified Data Repository). The core network 118 further includes an AUSF (Authentication Server Function) 114 and a PCF (Policy Control Function) 115.

The core network 118 may have multiple network slices 106, 107 and for each network slice 106, 107, the operator may create multiple network slice instances (NSIs) 108, 109. For example, the core network 118 includes a first core network slice 106 with three core network slice instances (CNIs) 108 for providing Enhanced Mobile Broadband (eMBB) and a second core network slice 107 with three core network slice instances (CNIs) 109 for providing Vehicle-to-Everything (V2X).

Typically, when a network slice is deployed, network functions (NFs) are instantiated, or (if already instantiated) referenced to form a network slice instance (NSI) and network functions that belong to a network slice instance are configured with a network slice instance identification.

Specifically, in the shown example, each instance 108 of the first core network slice 106 includes a first Session Management Function (SMF) 110 and a first User Plane Function (UPF) 111 and each instance 109 of the second core network slice 107 includes a second Session Management Function (SMF) 112 and a second User Plane Function (UPF) 113.

The core network 118 may further include an NRF (Network Repository Function) 117, which provides network function/network function service registration, network function/network function service discovery. The NRF may have an interface to any network function in the mobile radio communication network side, e.g. have an interface to the AMF 101, the SMFs 110, 112. For simplicity, only the interface between the NRF 117 and the AMF 101 is depicted.

The radio communication system 100 may further include an OAM (Operation, Administration and Maintenance) function (or entity) 116, e.g. implemented by one or more OAM servers which is connected to the RAN 103 and the core network 118 (connections are not shown for simplicity).

According to 3GPP (Third Generation Partnership Project), it is discussed to provide 5G non-public networks.

In contrast to a network that offers mobile network services to the general public, a 5G non-public network (NPN, also sometimes called a private network) provides 5G network services to a clearly defined user organisation or group of organisations. The 5G non-public network is deployed on the organisation's defined premises, such as a campus or a factory. Non-public networks can for example be desirable because of:
- High quality-of-service requirements;
- High security requirements, met by dedicated security credentials;
- Isolation from other networks, as a form of protection against malfunctions in the public mobile network. Also, isolation may be desirable for reasons of performance, security, privacy, and safety;
- Accountability. A non-public network makes it easier to identify responsibility for availability, maintenance, and operation.

A 5G NPN may be deployed as a Standalone Non-Public Network (SNPN) or as a Public Network Integrated NPN (PNI-NPN).

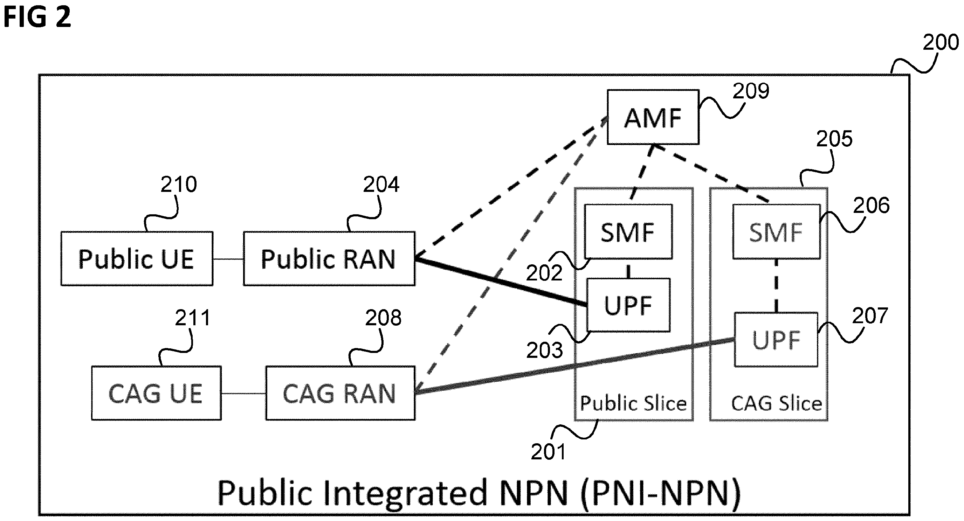

Figure 2 shows a public integrated NPN (PNI-NPN) 200.

In a public network integrated NPN deployment a non-public network is deployed in conjunction with one or more public networks. This deployment is a combination of public and non-public networks. These scenarios assume that certain use cases on the defined premises can be supported entirely by the public network, whereas others require a dedicated NPN. There are therefore two network parts, one public and one non-public, with traffic assigned to the appropriate part.

In the example of figure 2, the public network part includes a public core network slice 201, e.g. including an SMF 202 and a UPF 203, and a public RAN 204. The non-public network part includes a CAG (Closed Access Group) core network slice 205, e.g. including an SMF 206 and a UPF 207, and a CAG RAN 208. In this example, there is an AMF 209 belonging to both parts.

A Closed Access Group (CAG) identifies a group of subscribers who are permitted to access one or more CAG cells (i.e. radio cells of CAG RAN 208) associated with the CAG (wherein it is possible that the one or more CAG cells are associated with multiple CAGs including the CAG).

A CAG may be used for a Public network integrated NPN 200 to prevent UE(s), which are not allowed to access the NPN via the associated CAG cell(s), from automatically selecting and accessing the associated CAG cell(s).

A "public" UE 210 may use the public network, i.e. register with the public part and establish communication sessions via the public part.

A CAG UE 211, i.e. a UE 102 which has access rights to the NPN may use the NPN, i.e. register with the private part and establish communication sessions via the private part (e.g. to exchange useful information).

The NPN and the public network may share part of a radio access network, while other network functions remain segregated. In that case, all data flows related to the NPN traffic portion are within the logical perimeter of the defined premises, e.g. factory, and the public network traffic portion is transferred to the public network. It should be noted that 3GPP specifications include functionality that enables RAN sharing. It is possible to configure additional base stations that are only accessible to NPN users.

For example, a public operator provides dedicated CAG-RAN and CN functions to a specific enterprise. The CAG-RAN 208 broadcasts the CAG IDs in the RRC, so that only CAG UEs 211 tries for a connection with the private part. Non-CAG UEs 210 (Public UEs) know the respective radio cell is dedicated to CAG (by broadcast message) and consequently do not try to connect to the private part.

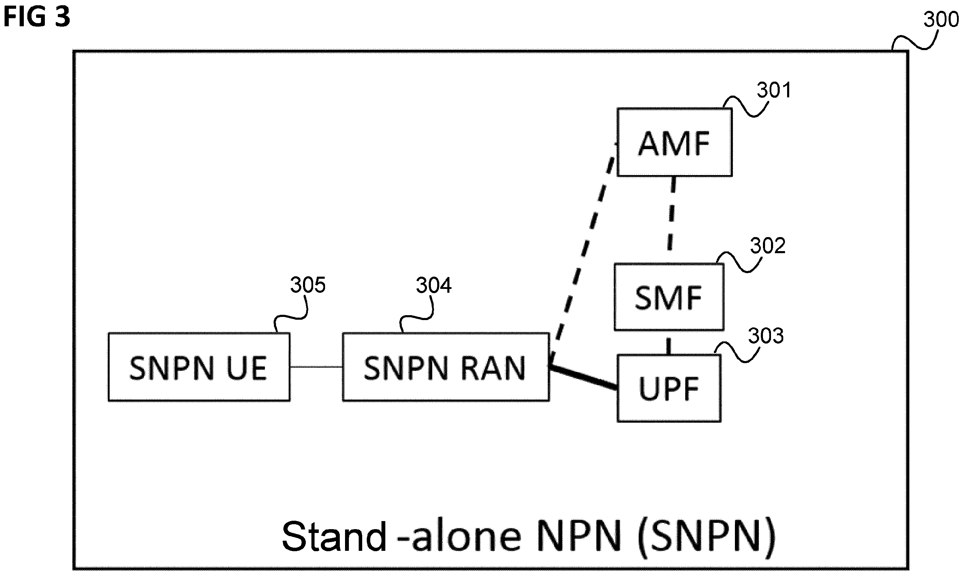

Figure 3 shows a Stand-alone NPN (SNPN) 300.

In a standalone non-public network (isolated deployment), the NPN is deployed as an independent, standalone network. All network functions, in this example an AMF 301, an SMF 302 and a UPF 303 as well as the SNPN RAN 304 are located inside the logical perimeter of the defined premises (e.g. factory) and the NPN 300 is separate from the public network. The only communication path between the NPN and the public network is via a firewall. The firewall is a clearly defined and identifiable demarcation point. The operator of the NPN has sole and exclusive responsibility for operating the NPN and for all service attributes up to this point.

The public operator does not have any role in the SNPN i.e. an enterprise can have its deployment with dedicated spectrum without relay public operators.

An SNPN UE 305, i.e. a UE 102 which has access rights to the SNPN 300 may use the SNPN 300, i.e. register with the SNPN 300 and establish communication sessions via the SNPN 300. An SNPN-enabled UE 305 may support an SNPN access mode (which is different from PLMN selection mode). The SNPN RAN 304 broadcasts a "PLMN ID" and a "NID". PLMN IDs can be based on mobile country code (MCC) 999 as assigned by ITU (International Telecommunication Union).

An SNPN is based on 3GPP-defined technologies and is entirely independent with its own dedicated SNPN ID. An optional connection to public network services via a firewall can be employed to enable access to public network services, such as voice, while within NPN coverage. Alternatively, NPN devices (UEs) can subscribe directly to the public network to access its services (dual subscription). If desired, the optional connection can be leveraged to access NPN services via the public network. Furthermore, the NPN operator can conclude roaming agreements with one or more public network operators, and the optional connection also be used for this purpose. Roaming agreements with public networks may entail technical constraints, depend on the specific use case.

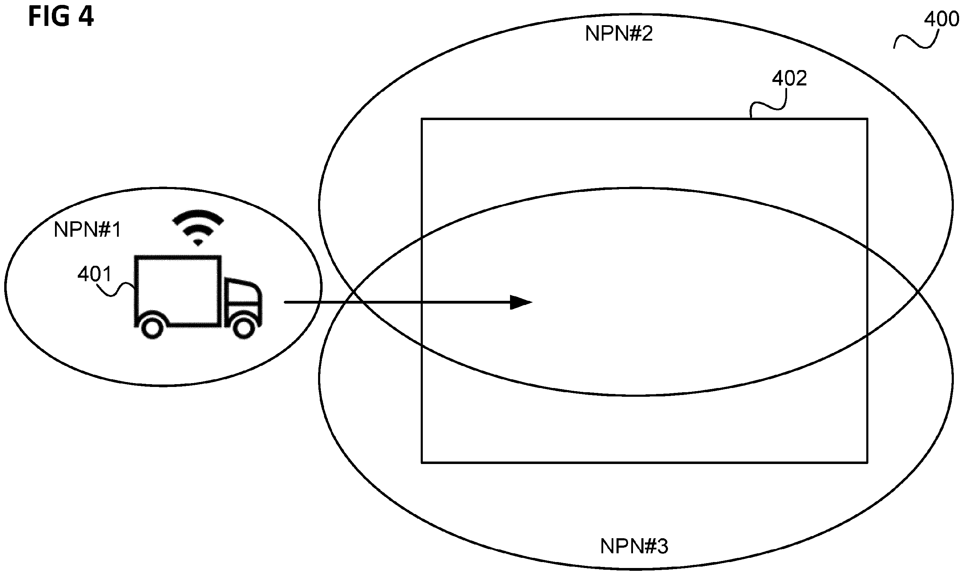

Figure 4 illustrates a use case of an NPN.

In the example of figure 4, a UE 401 (e.g. installed in an autonomous truck belonging to a supplier of automotive parts) belongs to an NPN#1, i.e. NPN#1 holds the UE's subscription and NPN#1 is a home network for the UE 401. NPN#1 is for example installed to cover a factory of the supplier.

For delivery, the automotive truck 401 enters the area of a factory 402 (of a car manufacturer) which has an NPN#2. This means that the UE 401 enters a NPN#2 serving area e.g. for the delivery of goods. For easy supply chain processing, the UE 401 should connect to the NPN#2 and provide the goods based on guidelines provided via NPN#2. For this, the operator of NPN#2 may have some kind of roaming agreement with the operator of NPN#1, e.g. following a similar logic as a PLMN roaming agreement.

However, it is assumed that there is an NPN#3 whose coverage overlaps with NPN#2 so that the UE 401 is in the coverage area of both. The UE 401 should only be allowed to connect to NPN#2, but not to NPN#3 network.

In the following, approaches are described which allow, for example in the use case of figure 4, the UE 401, to get the connectivity for NPN#2 network, to know that it has right for connectivity from NPN#2, but not for NPN#3. Furthermore, approaches are described in the following allowing the UE 401 to get access information to access the NPN#2 network (in case the UE 401 does not have it yet).

Access information for an NPN (e.g. NPN#2) provided to an UE (e.g. UE 401) may include the information that the UE has the right to access the NPN and possibly other parameters as well as the credentials which may be required to access the NPN.

Exemplary embodiments are described in the following for the case of a public integrated NPN (PIN-NPN). However, the approaches described in the following are also applicable for an SNPN, e.g. replacing a CAG ID with a respective SNPN ID (e.g. a combination of PLMN ID and NID broadcast by the SNPN).

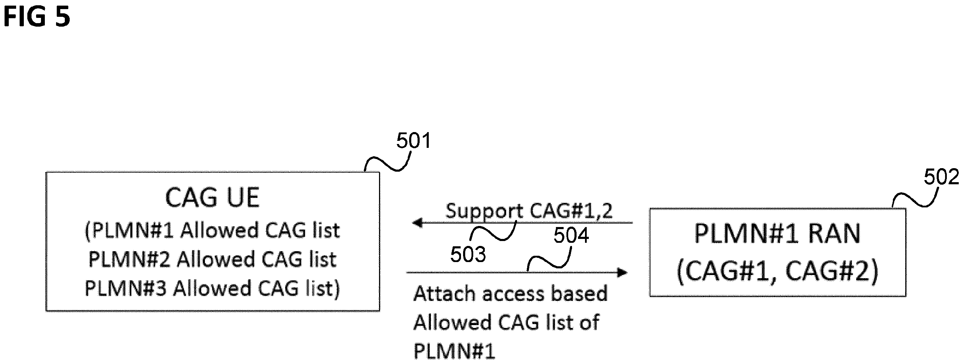

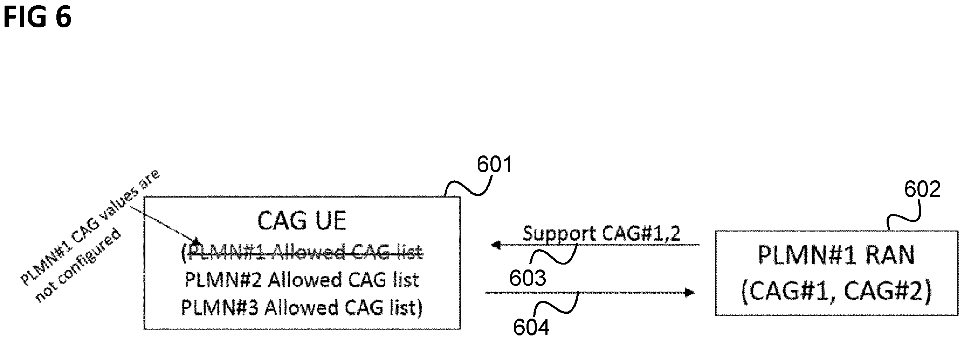

Regarding a PIN-NPN, it should be noted that CAG IDs are typically not standardized values, i.e. CAG IDs are operator specific and may be unique within a PLMN. Furthermore, it should be noted that a CAG UE 211 may be a CAG-only UE i.e. a UEs that is only allowed to connect to a CAG cell (i.e. radio cell of CAG RAN), and even not try for an access in a public cell. From this, an issue may arise that is described in the following with reference to figures 5 and 6 (and that may also be addressed by the approaches described further below).

Figure 5 shows an example for a CAG UE 501 in the coverage area of a RAN 502 of a PLMN#1.

It is assumed that the CAG UE 501, e.g. corresponding to CAG UE 211 is configured with lists of CAGs it is allowed to access. These lists are denoted as allowed CAG lists. For example, the CAG UE 501 stores allowed CAG lists for the PLMN#1, a PLMN#2 and a PLMN#3.

The RAN 502 of PLMN#1 may support CAG#1 and CAG#2 (i.e. provide access to UEs that belong to CAG#1 or CAG#2) and may broadcast this fact in 503. Assuming that the allowed CAG list for the PLMN#1 configured in the CAG UE 501 includes CAG#1 or CAG#2 (or both), the CAG UE 501 may connect (e.g. request registration) to the RAN 502 in 504.

However, the case may arise that due to some reason, the UE is not configured with the Allowed CAG list of PLMN#1, as it is illustrated in figure 6.

Figure 6 shows, similarly to figure 5, an example for a CAG UE 601 in the coverage area of a RAN 602 of a PLMN#1.

However, in this example, the CAG UE 601 is not configured with the Allowed CAG list of PLMN#1 even if it may be allowed to access CAG#1 and CAG#2 or both. Thus, even if notified of the support of CAG#1 and CAG#2 by the RAN 602 in 603, the CAG UE 601 will not try to connect to the RAN 602 in 604 because it assumes that it does not have access rights to the RAN 602.

The lack of the configuration of the UE 601 with the Allowed CAG list of PLMN#1 may be due to error, e.g. the configuration of the Allowed CAG list of PLMN#1 may just be missing due to a mistake in the configuration of the UE 601. It may also occur that the UE 601 lacks the configuration with the Allowed CAG list of PLMN#1 because of the fact that the roaming partner (i.e. PLMN#1) of the UE's home network has changed the CAG IDs and the UE 601 has not been updated accordingly.

Assuming the UE 602 is only in the coverage of PLMN#1, as the UE 602 cannot gain access to the network, the layer of the UE responsible for registration (e.g. the UE's modem) reports "Out of Coverage" error to an upper layer.

It should be noted that since the UE 602 does not connect to the PLMN#1 (because it assumes it does not have the right to do so), i.e., stays unconnected, the network side (e.g. the UE's home PLMN) cannot configure the UE 602 (e.g. update the UE's configuration) to allow it to connect to PLMN#1.

So, the UE 602 may have the right to roam in PLMN#1, but has (from its point of view) no subscription to any CAG in PLMN#1. A similar issue may arise in context of an SNPN in case the UE lacks configuration of an SNPN ID (e.g. PLMN ID and NID broadcast by the SNPN).

The embodiments described in the following, allow the UE 602 to get access to a specific CAG of PLMN#1 or an SNPN. In particular, embodiments allow updating the configuration of the UE 602, e.g. provisioning of CAG access information (e.g. an allowed CAG list of a PLMN) by the UE's home PLMN.

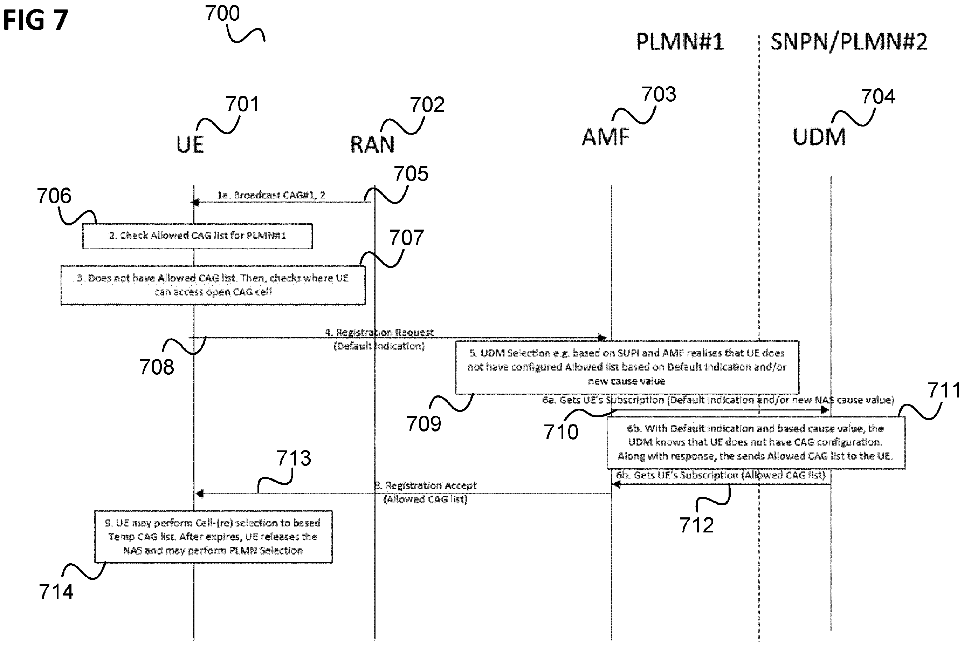

Figure 7 shows a message flow diagram 700 according to an embodiment.

A UE 701, e.g. corresponding to CAG UE 601 and CAG UE 211, a RAN 702 (of a PLMN#1 or SNPN#1), e.g. corresponding to RAN 602 and CAG RAN 208, an AMF 703 (of PLMN#1), e.g. corresponding to AMF 209 and a UDM 704, e.g. of the UE's home network (e.g. a PLMN#2 or an SNPN#2), are involved in the flow.

In 705, the RAN 702 broadcasts (in the radio cell in which the UE 701 is located) e.g. that it supports CAG#1 and CAG#2 (in the radio cell) or SNPN#1 identifier e.g. PLMN#1 and NID (Network identifier).

In 706, the UE 701 checks whether it may access the RAN 702, e.g. by checking whether it belongs to CAG#1 and CAG#2. As in the example of figure 6, it is assumed that the UE 701 lacks the configuration with the Allowed CAG list for PLMN#1, i.e. does not have the Allowed CAG list for PLMN#1.

Thus, as explained with reference to figure 6, in 707, the UE 701 would assume that it does not have the right to access the RAN 702 and initial RAN access would fail. Similarly, in case of SNPN, the UE cannot try for an access to connect a SNPN#1 as it is not the home SNPN#2.

However, according to various embodiments, the RAN, in 705, broadcasts that the radio cell in which the UE 701 is located is an "open cell" in a certain sense for an access, e.g.:
- Open for specific use (CAG/SNPN management/Provision)
- Open for non-roaming UE or roaming UE, specific PLMN or CAG, NW slice, SNPN (PLMN ID + NID)
- Open for any UE (CAG or non-CAG UEs or SNPN UEs)

This may happen for example via a UAC (Unified Access Control) mechanism, e.g. by defining a new value for an Access Category such as CAG or SNPN management/provision. For example values in the UAC category range 8-32 (currently undefined) and/or in the UAC category range 32-63 (provided for operator specific definitions) may be used for one or more such new access categories. For example, UAC category value#10 is allocated for CAG management/provision and value#11 is allocated for SNPN management/provision. For example, if the RAN, in 705, broadcasts a value#10, the UE 701 would assume that this RAN can also provide initial access for CAG provisioning.

In case that the RAN 702 does not broadcast the information which UE may access it the initial access handling may be controlled by a corresponding RRC (radio resource control) accept or reject of a UE. In such a case, the RAN 702 may similarly accept a UE for CAG or SNPN management/provision (even if the UE does not know that it belongs to a CAG group supported by the RAN 702).

Alternatively, the RAN 702 may for example broadcast that a CAG cell (in which the UE is located) is an open cell by including an additional field in/along the CAG ID (of a CAG group the RAN 702 supports in that cell) indicating whether it is an open cell, e.g. indicating one of the categories "Restricted" or "Non-Restricted" or "Default". Same mechanism also applies to the SNPN e.g. SNPN RAN including an additional field in/along the SNPN identifier (of a SNPN group the RAN 702 supports in that cell) indicating whether it is an open cell, e.g. indicating one of the categories "Restricted" or "Non-Restricted" or "Default".

For example, the RAN 702 may broadcast in 705 "CAG#1" + "Restricted" or "CAG#2" + "Non-Restricted". The UE 701 may only access a "Restricted" cell, if a CAG ID restricted by the cell (i.e. a "Restricted" CAG ID) is part of the Allowed CAG list in the UE 701. If, for example, one of the CAG ID is "Non-Restricted" (e.g. the RAN broadcasts "CAG#1" + "Non-Restricted" or broadcasts "CAG#2" + "Non-Restricted"), the UE 701 may access the CAG cell even if the CAG#1 and CAG#2 are not in the Allowed CAG list..

For simplicity, in the example of figure 7, it is assumed that the RAN 702 indicates that CAG#1 or CAG#2 or both are "open" CAG cells.

Thus, in 707, after having determined that it is not configured with an Allowed CAG list, the UE 701 checks whether it can access an "open" CAG cell, e.g. an "open for all" CAG cell (i.e. supporting at least one CAG with an "open for all" CAG ID). The UE 701 may then selects a CAG ID manually or automatically (CAGx), e.g. an "open for all" CAG ID) .

(Alternatively, e.g. if the RAN 701 does not broadcast which CAG groups it supports, the UE 701 may be allowed to access the RAN 702 as well as to request the CAG id (CAGx) for which it may access the RAN 702).

Having determined that at least one of the CAG IDs (and thus the CAG cell) are open, the UE 701 sends, in 708, a registration request to the network side (via the RAN 702 to the AMF 703).

The UE 701 includes a NPN Provisioning Indication (e.g. indicate that the UE is lack/missing/not configured initial access information/parameters) in the NAS serving as a request for access information (e.g. an "CAG provisioning indication") so that the AMF 703 can realize that e.g. the UE 701 is not configured with an Allowed CAG list for the serving PLMN (PLMN#1) or, for the case that instead of PLMN#1 an SNPN is used, with access information for SNPN access.

For example, the UE 701 may include a NAS cause value into the Registration Request message e.g. a cause value indicating "CAG management", "Temp access" or "Onboarding and Provisioning" etc., as an indication.

In 709, the AMF 703 selects a UDM based on SUPI (Subscription Permanent Identifier) or PLMN ID + NID (e.g. in the case of an SNPN instead of PLMN#1) and forwards the indication and/or new NAS cause value to the selected UDM 704 in 710 to get subscription and/or provision information of the UE 701.

In 711, the UDM 704 determines the Allowed CAG list and possibly further access information for the serving PLMN (e.g. in reaction to the new NAS cause value), and forwards the Allowed CAG list and/or the further access information (e.g. CAG list and/or PNI-NPN/SNPN access information) to the AMF 703 in 712 and/or in a separate container to the UE 701. In 713, e.g. with a registration accept message, the AMF 703 forwards this information received from the UDM 704 to the UE 701.

In 714, after receiving the Allowed CAG list (and possibly additional access information), UE may perform cell selection, and select the CAG cell based on the Allowed CAG list. In case of an SNPN (instead of PLMN#1), UE 701 selects the SNPN cell.

There is a use case for the possibility that a UE does not only have some CAGs that are permanently configured in the Allowed CAG list (e.g. your office, your factory, etc.) but also other CAGs that are for temporary access for a serving PLMN by a UE (e.g. a roaming UE). Similarly, temporary access to the SNPN network.

An example is that an employee stationed in an abroad location of a company visits the company's home office and should only gain access to the home office's NPN for the period of time he is scheduled to be in the home office. So, the NPN may support a CAG or SNPN group whose ID is only to be included on a temporarily Allowed CAG list or Allowed SNPN list of the employee's UE (rather than on a permanent Allowed CAG list or Allowed SNPN list).

In case the company decides that the employee can permanently access the home office's NPN, i.e. to belong to the NPN's CAG (e.g. because the employee often visits the home office), then the NPN (e.g. provided by a visited PLMN) may request the employee's home PLMN to add the CAG ID or SNPN ID to the employee's (permanent) Allowed CAG list or Allowed SNPN list.

To address this use case, the AMF 703 may provide the UE 701 with one or more temporary Allowed CAGs/SNPNs (e.g. for a temporary Allowed CAG list). For example, assuming that CAG#1 and CAG#2 are not part of the UE's permanent Allowed CAG list, the AMF 703 may, e.g. in a use case as described above, provide IDs of one or more temporary Allowed CAG to the UE 701 including at least one of CAG#1 ID and CAG#2 ID.

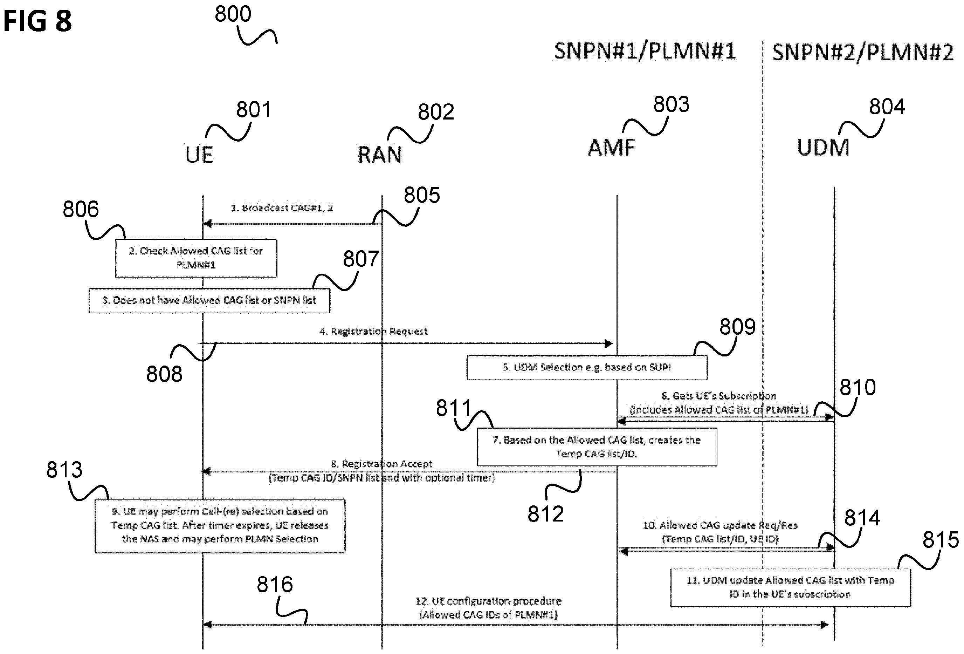

Figure 8 shows a message flow diagram 800 according to an embodiment for an example of provision of a temporary Allowed CAG list.

Similarly to the example of figure 7, a UE 801, e.g. corresponding to CAG UE 601 and CAG UE 211, a RAN 802 (of a PLMN#1), e.g. corresponding to RAN 602 and CAG RAN 208, an AMF 803 (of PLMN#1), e.g. corresponding to AMF 209 and a UDM 804, e.g. of the UE's home network (e.g. a PLMN#2 or an SNPN), are involved in the flow.

In 805, the RAN 802 broadcasts (in the radio cell in which the UE 801 is located) that it supports CAG#1 and CAG#2 (in the radio cell). Further, as in the example of figure 7, the RAN 802 indicates that CAG#1 or CAG#2 or both are "open" CAG cells.

In 806, the UE 801 checks whether it may access the RAN 802, e.g. by checking whether it belongs to CAG#1 and CAG#2.

It is now assumed that the UE 801 is correctly configured with the Allowed CAG list of PLMN#1 but the Allowed CAG list of PLMN#1 does not include CAG#1 ID or CAG#2 ID or both. (The flow may proceed similarly in case lacks the configuration with the Allowed CAG list of PLMN#1 as descried with reference to figure 7 since in both cases, the UE 801 assumes that it may not access the RAN 802).

Thus, in 807, after having determined that it is not configured with an Allowed CAG list including CAG#1 ID or CAG#2 ID, the UE 801 checks whether it can access an "open" CAG cell, e.g. an "open for all" CAG cell (i.e. supporting at least one CAG with an "open for all" CAG ID). The UE 801 may then select a CAG ID manually or automatically(CAGx), e.g. an "open for all" CAG ID).

(Alternatively, e.g. if the RAN 801 does not broadcast which CAG groups it supports, the UE 801 may be allowed to access the RAN 802 as well as to request the CAG id (CAGx) for which it may access the RAN 802).

Having determined that at least one of the CAG IDs (and thus the CAG cell) are open, the UE 801 sends, in 808, a registration request along with the NPN Provision Indication to the network side (via the RAN 802 to the AMF 803).

In 809, the AMF 703 selects a UDM based on SUPI (Subscription Permanent Identifier) or PLMN ID + NID (e.g. in the case of an SNPN instead of PLMN#1) and gets subscription information of the UE 801 from the selected UDM 804 in 810.

In 811, the AMF 803, based on the UE's identity (e.g. MSISDN (Mobile Station International Subscriber Directory Number), URI (Uniform Resource Identifier, etc.) allows the UE 801 to temporarily access the CAG cell of RAN 802 (or the SNPN in case of an SNPN instead of PLMN#1).

In 812, e.g. with a registration accept message, the AMF 803 confirms the access to the CAG cell (or SNPN, e.g. NID) to the UE 801 by sending a temporary CAG ID (or temporary SNPN ID) to the UE 801.

It may also provide a timer indicating when this temporary CAG ID/SNPN ID expires.

In 813, the UE 801 stores this temporary CAG ID/SNPN ID in a Temporary Allowed CAG List or SNPN List (available in the UE 801) and uses it only within this PLMN (PLMN#1). The UE deletes the temporary CAG ID/SNPN ID from the Temporary Allowed CAG List/SNPN List if the timer was provided and expires. When the UE 801 moves to another PLMN it clears all the content of the Temporary Allowed CAG List/SNPN List.

In 814, the serving network (PLMN#1), e.g. AMF 803, may request the UDM 804 to add the temporary CAG ID to the permanent Allowed CAG list (to make it permanent). The same applies for SNPN IDs. The UDM 804 may accept this in 815 and, in 816, may provide the updated Allowed CAG list/SNPN list to the UE 801 by triggering a UE Configuration Update procedure.

The case that the serving PLMN or the home PLMN does not use standardized CAG-IDs may be addressed as follows.

The serving AMF 703, 803 receives the Allowed CAG list for the serving PLMN from the home PLMN UDM 704, 804 during the Registration procedure or the UDM 704, 804 provides the home PLMN CAG IDs in another way.

The AMF 703, 803 verifies the received Allowed CAG list or SNPN list and checks whether any CAG IDs need to be modified or mapped based on a local policy.

This means that the AMF 703, 803 performs a mapping of home PLMN CAG IDs or SNPN IDs to the serving PLMN CAG ID or SNPNS ID values, e.g. home PLMN values to visited PLMN values.

After this, the AMF 703, 803 may send an Update Notification about these values to the UDM 704, 804 and the AMF 703, 803 or UDM 704, 804 may update the CAG IDs or SNPN IDs in the UE 701, 801 accordingly.

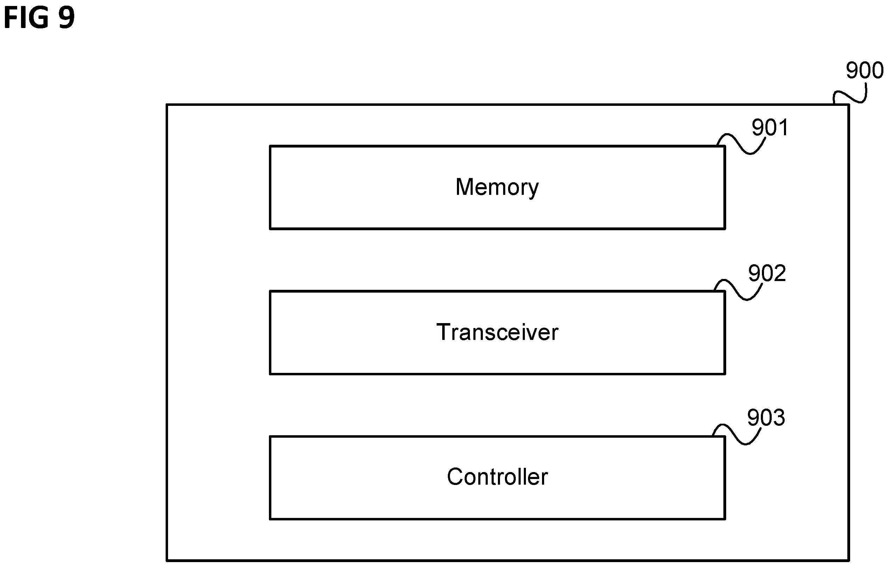

In summary, according to various embodiments, a communication terminal is provided as illustrated in figure 9.

Figure 9 shows a communication terminal 900 according to an embodiment of the invention.

The communication terminal 900 includes a memory 901 for storing a list of identifications of access groups to which the communication terminal 900 belongs, wherein each access group has access to one or more non-public networks (e.g. is a closed access group of one or more associated non-public networks).

The communication terminal 900 further includes a transceiver 902 configured to request registration and to establish a connection with a non-public network even if the memory does not store an indication of an access group which has access to the non-public network as an access group to which the communication terminal belongs and to receive, from the non-public network, a notification that the communication terminal 900 belongs to a group of communication terminals that have access to the non-public network.

Further, the communication terminal 900 includes a controller 903 configured to store an indication (received from the non-public network) of the group of communication terminals (to which the communication terminal belongs according to the notification) that have access to the non-public network in the list of identifications in the memory.

According to various embodiments, in other words, a communication terminal connects to an NPN (e.g. requests registration in the NPN) even if it has no knowledge that it belongs to a group of terminals (e.g. UEs) which have the right to access the NPN (i.e. has no knowledge that it belongs to the CAG of the NPN in case of a PNI-NPN or belongs to the group of users of an SNPN). The communication terminal may do this dependent on whether the NPN signals that it (or the NPN's radio cell in which the communication terminal is located) is an "open cell", e.g. in the sense that it is allowed to access the NPN for obtaining access information about the NPN (e.g. information about who belongs to a group of terminals which have right to access the NPN, i.e. have the right to access the NPN for use of communication services such as calls, Internet access etc., i.e. transmission of useful data rather than only control data like access information). For example, the NPN's RAN may broadcast a specific UAC code which indicates that access of the RAN is allowed e.g. for non-roaming UEs or for UE Provision or specific NPN type or UE type, etc. The UE may be pre-configured with a specific NPN type it can connect to (e.g. carries corresponding configuration information in its USIM), even if it has not stored that it belongs to the access group of a specific NPN. Based on the broadcast by the RAN, the UE decides whether it (and/or the NPN) belongs to any of the pre-configured types or categories (which it may connect to for obtaining access information, even if it has not stored that it belongs to the access group of a specific NPN) and if this is the case triggers the RRC Attach procedure.

If the communication terminal belongs to the access group (CAG group or group of users of an SNPN) of the NPN, this means that the communication terminal is an allowed user of the NPN with "complete" access (e.g. a first level of access including the right to use communication services for the exchange of useful data). If the communication and/or the NPN fulfils a type or category (e.g. stored in the communication terminal) which allows the communication terminal to use the NPN for acquisition of access information this may be seen as a second level of access (e.g. only for control information, e.g. only for obtaining access information).

An access group of an NPN may be a group of communication terminals for which, for each communication terminal, the subscription information of the communication terminal indicates that the communication terminal has the right to access the NPN (e.g. the subscription information indicates a CAG ID or an SNPN ID).

The communication terminal may then be notified in case it belongs to an access group of the NPN and adds this information to its memory (e.g. for later access to the NPN).

The approach of figure 9 may be used for providing a UE with NPN access during roaming scenarios. It may also be applicable in non-roaming scenarios. For example, a fresh mobile terminal (e.g. opened from the box or off-the-shelf device) does not have a full list of provision parameters (i.e. access information) for an access even if this terminal is in NPN#1 coverage (it is an home network). In this case, this terminal check for Open RAN cell for getting provision details for an access.. In particular, according to various embodiments, it provides Initial access handling mechanism allowing the UE to access the RAN even if the UE does not know it belongs to a UE group having the right to access the RAN.

The identifications of the one or more access groups may be one or more CAG IDs and/or one or more SNPN IDs.

It should be noted that the identification of a stand-alone NPN may be seen as the indication of an access group (namely of those communication terminals which have access (e.g. per their subscription) to the stand-alone NPN).

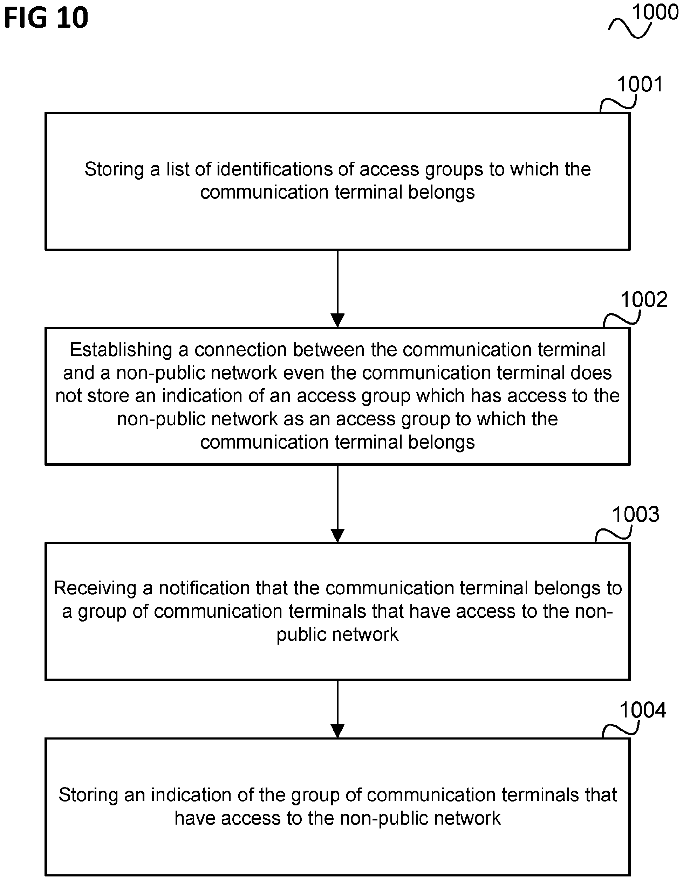

According to an embodiment of the invention, the communication terminal carries out the method illustrated in figure 10.

Figure 10 shows a flow diagram 1000 illustrating a method for configuring a communication terminal.

In 1001, a list of identifications of access groups to which the communication terminal belongs is stored in a memory of the communication terminal, wherein each access group has access to one or more non-public networks.

In 1002, a connection between the communication terminal and a non-public network is established (e.g. initiated by the communication terminal) even if the memory does not store an indication of an access group which has access to the non-public network as an access group to which the communication terminal belongs.

In 1003, the communication terminal receives, from the non-public network, a notification that the communication terminal belongs to a group of communication terminals that have access to the non-public network.

In 1004, the communication terminal stores an indication of the group of communication terminals that have access to the non-public network in the list of identifications in the memory.

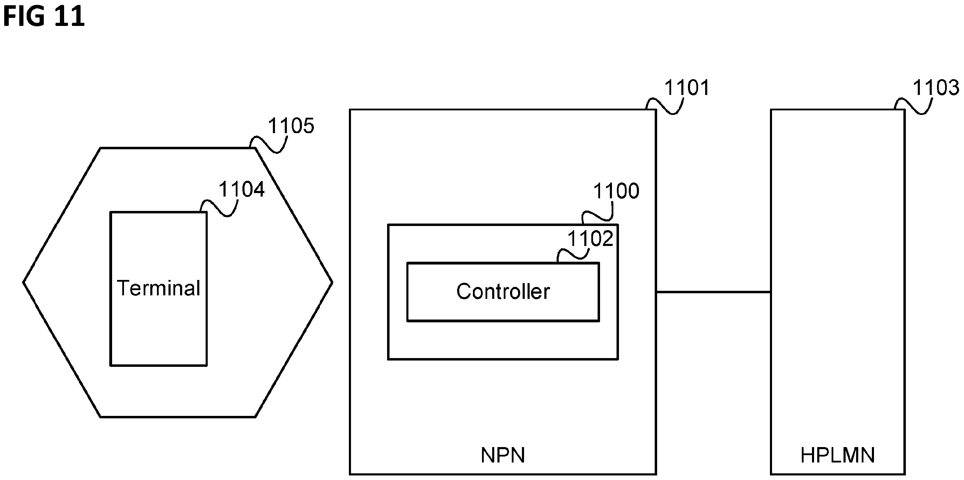

The network side may for example include a component as illustrated in Figure 11 which may be in communication with the communication terminal 900 of figure 9.

Figure 11 shows an access management component 1100 of a non-public network 1101.

The access management component 1100 includes a controller 1102 configured to transmit, to a home network 1103 of a communication terminal 1104 located in a radio cell 1105 of the non-public network 1101 (i.e. served by the NPN 1101, i.e. operated by a RAN of the NPN 1101), a request for information whether the communication terminal 1104 belongs to a group of communication terminals that have access to the non-public network 1101.

The controller 1102 is further configured to, if the communication terminal belongs to a group of communication terminals that have access to the non-public network, transmit a notification to the communication terminal that the communication terminal belongs to a group of communication terminals that have access to the non-public network.

The controller 1102 may for example transmit the request and the notification by means of an interface, e.g. for communication between network components, e.g. network functions, of the NPN.

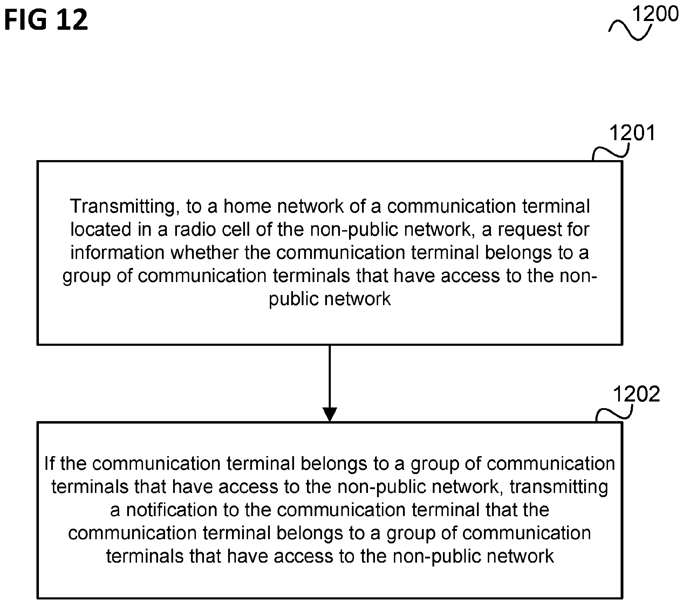

The network side (i.e. the components (e.g. network functions of the NPN 1101) for example carries out a method as illustrated in figure 12.

Figure 12 shows a flow diagram 1200 illustrating a method for access management of a non-public network.

In 1201, a request for information whether the communication terminal belongs to a group of communication terminals that have access to the non-public network is transmitted to a home network of a communication terminal located in a radio cell of the non-public network.

In 1202, if the communication terminal belongs to a group of communication terminals that have access to the non-public network, a notification is transmitted to the communication terminal that the communication terminal belongs to a group of communication terminals that have access to the non-public network.

The components of the communication terminal and the access management component (e.g. the transceiver, controller etc.) may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit". While specific aspects have been described, it should be understood by those skilled in the art that various changes in form and detail may be made therein without departing from the scope of the aspects of this disclosure as defined by the appended claims. The scope is thus indicated by the appended claims.

## Claims

1. A communication terminal (102, 701, 801, 900, 1104) comprising:
a memory (901) for storing a list of identifications of access groups to which the communication terminal belongs, wherein each access group has access to one or more non-public networks (200, 300, 1101);
a transceiver (902) configured to
request registration and establish a connection with a non-public network even if the memory does not store an indication of an access group which has access to the non-public network as an access group to which the communication terminal belongs
and
receive, from the non-public network, a notification that the communication terminal belongs to a group of communication terminals that have access to the non-public network; and
a controller (903) configured to store an indication, received from the non-public network, of the group of communication terminals that have access to the non-public network in the list of identifications in the memory.

2. The communication terminal (102, 701, 801, 900, 1104) of claim 1, wherein the transceiver (902) is configured to check whether the communication terminal is located in a radio cell of the non-public network (200, 300, 1101) which is open for access for communication terminals which are not part of access groups which have access to the non-public network and to establish a connection with the non-public network if the communication terminal is located in a radio cell of the non-public network which is open for access for communication terminals which are not part of access groups which have access to the non-public network.

3. The communication terminal (102, 701, 801, 900, 1104) of claim 1 or 2, wherein the transceiver (902) is configured to check whether the communication terminal is located in a radio cell of the non-public network (200, 300, 1101) which is open for obtaining access information of the non-public network for communication terminals which are not part of access groups which have access to the non-public network and to establish a connection with the non-public network if the communication terminal is located in a radio cell of the non-public network which is open for obtaining access information of the non-public network for communication terminals which are not part of access groups which have access to the non-public network.

4. The communication terminal (102, 701, 801, 900, 1104) of any one of claims 1 to 3, wherein the transceiver (902) is configured to transmit a request for access information of the non-public network (200, 300, 1101) to the non-public network.

5. The communication terminal (102, 701, 801, 900, 1104) of claim 4, wherein the request for access information includes a request for information about access groups which have access to the non-public network (200, 300, 1101).

6. The communication terminal (102, 701, 801, 900, 1104) of any one of claims 1 to 5, wherein the list comprises a list of identifications of access groups to which the communication terminal temporarily belongs and the received notification is a notification that the communication terminal temporarily belongs to a group of communication terminals that have access to the non-public network (200, 300, 1101).

7. The communication terminal (102, 701, 801, 900, 1104) of any one of claims 1 to 6, wherein the list comprises a list of one or more identifications of one or more closed access groups of a public integrated non-public networks (200) .

8. The communication terminal (102, 701, 801, 900, 1104) of any one of claims 1 to 7, wherein the list comprises a list of one or more identifications of one or more standalone non-public networks (300) to which the communication terminal has access.

9. A method for configuring a communication terminal (102, 701, 801, 900, 1104) comprising:
storing (1001), in a memory (901) of the communication terminal, a list of identifications of access groups to which the communication terminal belongs, wherein each access group has access to one or more non-public networks (200, 300, 1101);
requesting registration and establishing (1002), by the communication terminal, a connection with a non-public network even if the memory does not store an indication of an access group which has access to the non-public network as an access group to which the communication terminal belongs; receiving (1003), by the communication terminal, from the non-public network, a notification that the communication terminal belongs to a group of communication terminals that have access to the non-public network; and storing (1004), by the communication terminal, an indication received from the non-public network of the group of communication terminals that have access to the non-public network in the list of identifications in the memory.

10. The method of claim 9 further comprising transmitting (1201), by an access management component (1100) of the non-public network, in reaction to requesting registration by the communication terminal (102, 701, 801, 900, 1104), to a home network (1103) of the communication terminal located in a radio cell (1105) of the non-public network, a request for information whether the communication terminal belongs to a group of communication terminals that have access to the non-public network; and, if the communication terminal belongs to a group of communication terminals that have access to the non-public network, transmitting (1202), by the access management component of the non-public network, a notification to the communication terminal that the communication terminal belongs to a group of communication terminals that have access to the non-public network.

## Patentansprüche

1. Ein Kommunikationsendgerät (102, 701, 801, 900, 1104), aufweisend:
einen Speicher (901) zum Speichern einer Liste von Identifikationen von Zugangsgruppen, zu denen das Kommunikationsendgerät gehört, wobei jede Zugangsgruppe Zugang zu einem oder mehreren nicht-öffentlichen Netzwerken (200, 300, 1101) hat;
einen Sendeempfänger (902), der konfiguriert ist,
eine Registrierung anzufordern und eine Verbindung mit einem nicht-öffentlichen Netzwerk herzustellen, selbst wenn der Speicher keine Angabe einer Zugangsgruppe, die Zugang zu dem nicht-öffentlichen Netzwerk hat, als eine Zugangsgruppe speichert, zu der das Kommunikationsendgerät gehört
und
eine Mitteilung von dem nicht-öffentlichen Netzwerk zu empfangen, dass das Kommunikationsendgerät zu einer Gruppe von Kommunikationsendgeräten gehört, die Zugang zu dem nicht-öffentlichen Netzwerk haben; und
eine Steuereinrichtung (903), die konfiguriert ist, eine von dem nicht-öffentlichen Netzwerk empfangene Angabe der Gruppe von Kommunikationsendgeräten, die Zugang zu dem nicht-öffentlichen Netzwerk haben, in der Liste von Identifikationen in dem Speicher zu speichern.

2. Das Kommunikationsendgerät (102, 701, 801, 900, 1104) nach Anspruch 1, wobei der Sendeempfänger (902) konfiguriert ist, zu überprüfen, ob sich das Kommunikationsendgerät in einer Funkzelle des nicht-öffentlichen Netzwerks (200, 300, 1101) befindet, die für Kommunikationsendgeräte, die nicht Teil von Zugangsgruppen sind, die Zugang zu dem nicht-öffentlichen Netzwerk haben, offen ist, und eine Verbindung mit dem nicht-öffentlichen Netzwerk herzustellen, wenn sich das Kommunikationsendgerät in einer Funkzelle des nicht-öffentlichen Netzwerks befindet, die für Kommunikationsendgeräte, die nicht Teil von Zugangsgruppen sind, die Zugang zu dem nicht-öffentlichen Netzwerk haben, offen ist.

3. Das Kommunikationsendgerät (102, 701, 801, 900, 1104) nach Anspruch 1 oder 2, wobei der Sendeempfänger (902) konfiguriert ist, zu prüfen, ob sich das Kommunikationsendgerät in einer Funkzelle des nicht-öffentlichen Netzwerks (200, 300, 1101) befindet, die für den Erhalt von Zugangsinformationen des nicht-öffentlichen Netzwerks für Kommunikationsendgeräte offen ist, die nicht Teil von Zugangsgruppen sind, die Zugang zu dem nicht-öffentlichen Netzwerk haben, und eine Verbindung mit dem nicht-öffentlichen Netzwerk herzustellen, wenn sich das Kommunikationsendgerät in einer Funkzelle des nicht-öffentlichen Netzwerks befindet, die für den Erhalt von Zugangsinformationen des nicht-öffentlichen Netzwerks für Kommunikationsendgeräte offen ist, die nicht Teil von Zugangsgruppen sind, die Zugang zu dem nicht-öffentlichen Netzwerk haben.

4. Das Kommunikationsendgerät (102, 701, 801, 900, 1104) nach einem der Ansprüche 1 bis 3, wobei der Sendeempfänger (902) konfiguriert ist, eine Anfrage nach Zugangsinformation des nicht-öffentlichen Netzwerks (200, 300, 1101) an das nicht-öffentliche Netzwerk zu senden.

5. Das Kommunikationsendgerät (102, 701, 801, 900, 1104) nach Anspruch 4, wobei die Anforderung nach Zugangsinformation eine Anforderung von Information über Zugangsgruppen enthält, die Zugang zu dem nicht-öffentlichen Netzwerk (200, 300, 1101) haben.

6. Das Kommunikationsendgerät (102, 701, 801, 900, 1104) nach einem der Ansprüche 1 bis 5, wobei die Liste eine Liste von Identifikationen von Zugangsgruppen aufweist, zu denen das Kommunikationsendgerät vorübergehend gehört, und die empfangene Benachrichtigung eine Benachrichtigung ist, dass das Kommunikationsendgerät vorübergehend zu einer Gruppe von Kommunikationsendgeräten gehört, die Zugang zu dem nicht-öffentlichen Netzwerk (200, 300, 1101) haben.

7. Das Kommunikationsendgerät (102, 701, 801, 900, 1104) nach einem der Ansprüche 1 bis 6, wobei die Liste eine Liste von einer oder mehreren Identifikationen einer oder mehrerer geschlossener Zugangsgruppen eines öffentlich-integrierten nicht-öffentlichen Netzwerks (200) aufweist.

8. Das Kommunikationsendgerät (102, 701, 801, 900, 1104) nach einem der Ansprüche 1 bis 7, wobei die Liste eine Liste von einer oder mehreren Identifikationen eines oder mehrerer eigenständiger nicht-öffentlicher Netze (300) aufweist, zu denen das Kommunikationsendgerät Zugang hat.

9. Ein Verfahren zum Konfigurieren eines Kommunikationsendgeräts (102, 701, 801, 900, 1104), aufweisend:
Speichern (1001) einer Liste von Identifikationen von Zugangsgruppen, zu denen das Kommunikationsendgerät gehört, in einem Speicher (901) des Kommunikationsendgeräts, wobei jede Zugangsgruppe Zugang zu einem oder mehreren nicht-öffentlichen Netzwerken (200, 300, 1101) hat;
Anfordern einer Registrierung und Herstellen (1002), durch das Kommunikationsendgerät, einer Verbindung mit einem nicht-öffentlichen Netzwerk, selbst wenn der Speicher keine Angabe einer Zugangsgruppe, die Zugang zu dem nicht-öffentlichen Netzwerk hat, als eine Zugangsgruppe speichert, zu der das Kommunikationsendgerät gehört;
Empfangen (1003), durch das Kommunikationsendgerät, von dem nicht-öffentlichen Netzwerk, einer Benachrichtigung, dass das Kommunikationsendgerät zu einer Gruppe von Kommunikationsendgeräten gehört, die Zugang zu dem nicht-öffentlichen Netzwerk haben; und
Speichern (1004), durch das Kommunikationsendgerät, einer von dem nicht-öffentlichen Netzwerk empfangenen Angabe der Gruppe von Kommunikationsendgeräten, die Zugang zu dem nicht-öffentlichen Netzwerk haben, in der Liste von Identifikationen in dem Speicher.

10. Das Verfahren nach Anspruch 9, ferner aufweisend.
Übertragen (1201), durch eine Zugangsverwaltungskomponente (1100) des nicht-öffentlichen Netzwerks, als Reaktion auf das Anfordern einer Registrierung durch das Kommunikationsendgerät (102, 701, 801, 900, 1104), an ein Heimatnetzwerk (1103) des Kommunikationsendgeräts, das sich in einer Funkzelle (1105) des nicht-öffentlichen Netzwerks befindet, einer Anforderung nach Information darüber, ob das Kommunikationsendgerät zu einer Gruppe von Kommunikationsendgeräten gehört, die Zugang zu dem nicht-öffentlichen Netzwerk haben; und,
wenn das Kommunikationsendgerät zu einer Gruppe von Kommunikationsendgeräten gehört, die Zugang zu dem nicht-öffentlichen Netzwerk haben, Übertragen (1202), durch die Zugangsverwaltungskomponente des nicht-öffentlichen Netzwerks, einer Mitteilung an das Kommunikationsendgerät, dass das Kommunikationsendgerät zu einer Gruppe von Kommunikationsendgeräten gehört, die Zugang zu dem nicht-öffentlichen Netzwerk haben.

## Revendications

1. Terminal de communication (102, 701, 801, 900, 1104), comprenant :
une mémoire (901) pour stocker une liste d'identifications de groupes d'accès auxquels le terminal de communication appartient, où chaque groupe d'accès a accès à un ou plusieurs réseaux non publics (200, 300, 1101) ;
un émetteur-récepteur (902) configuré pour
demander un enregistrement et établir une connexion avec un réseau non public même si la mémoire ne stocke pas d'indication d'un groupe d'accès qui a accès au réseau non public en tant que groupe d'accès auquel le terminal de communication appartient,
et
recevoir, du réseau non public, une notification selon laquelle le terminal de communication appartient à un groupe de terminaux de communication qui ont accès au réseau non public ; et
un contrôleur (903) configuré pour stocker une indication, reçue du réseau non public, du groupe de terminaux de communication qui ont accès au réseau non public dans la liste d'identifications dans la mémoire.

2. Terminal de communication (102, 701, 801, 900, 1104) selon la revendication 1, dans lequel l'émetteur-récepteur (902) est configuré pour vérifier si le terminal de communication est situé dans une cellule radio du réseau non public (200, 300, 1101) qui est ouverte à l'accès pour les terminaux de communication qui ne font pas partie de groupes d'accès qui ont accès au réseau non public et pour établir une connexion avec le réseau non public si le terminal de communication est situé dans une cellule radio du réseau non public qui est ouverte à l'accès pour les terminaux de communication qui ne font pas partie de groupes d'accès qui ont accès au réseau non public.

3. Terminal de communication (102, 701, 801, 900, 1104) selon la revendication 1 ou 2, dans lequel l'émetteur-récepteur (902) est configuré pour vérifier si le terminal de communication est situé dans une cellule radio du réseau non public (200, 300, 1101) qui est ouverte pour obtenir des informations d'accès du réseau non public pour les terminaux de communication qui ne font pas partie de groupes d'accès qui ont accès au réseau non public et pour établir une connexion avec le réseau non public si le terminal de communication est situé dans une cellule radio du réseau non public qui est ouverte pour obtenir des informations d'accès du réseau non public pour des terminaux de communication qui ne font pas partie de groupes d'accès qui ont accès au réseau non public.

4. Terminal de communication (102, 701, 801, 900, 1104) selon l'une quelconque des revendications 1 à 3, dans lequel l'émetteur-récepteur (902) est configuré pour transmettre une demande d'informations d'accès du réseau non public (200, 300, 1101) au réseau non public.

5. Terminal de communication (102, 701, 801, 900, 1104) selon la revendication 4, dans lequel la demande d'informations d'accès comprend une demande d'informations sur les groupes d'accès qui ont accès au réseau non public (200, 300, 1101).

6. Terminal de communication (102, 701, 801, 900, 1104) selon l'une quelconque des revendications 1 à 5, dans lequel la liste comprend une liste d'identifications de groupes d'accès auxquels le terminal de communication appartient temporairement et la notification reçue est une notification selon laquelle le terminal de communication appartient temporairement à un groupe de terminaux de communication qui ont accès au réseau non public (200, 300, 1101).

7. Terminal de communication (102, 701, 801, 900, 1104) selon l'une quelconque des revendications 1 à 6, dans lequel la liste comprend une liste d'une ou de plusieurs identifications d'un ou de plusieurs groupes d'accès fermés d'un réseau non public intégré en public (200).

8. Terminal de communication (102, 701, 801, 900, 1104) selon l'une quelconque des revendications 1 à 7, dans lequel la liste comprend une liste d'une ou de plusieurs identifications d'un ou de plusieurs réseaux non publics autonomes (300) auxquels le terminal de communication a accès.

9. Procédé pour configurer un terminal de communication (102, 701, 801, 900, 1104), comprenant :
le stockage (1001), dans une mémoire (901) du terminal de communication, d'une liste d'identifications de groupes d'accès auxquels le terminal de communication appartient, où chaque groupe d'accès a accès à un ou plusieurs réseaux non publics (200, 300, 1101) ;
la demande d'un enregistrement et l'établissement (1002), par le terminal de communication, d'une connexion avec un réseau non public même si la mémoire ne stocke pas d'indication d'un groupe d'accès qui a accès au réseau non public en tant que groupe d'accès auquel le terminal de communication appartient ;
la réception (1003), par le terminal de communication, à partir du réseau non public, d'une notification selon laquelle le terminal de communication appartient à un groupe de terminaux de communication qui ont accès au réseau non public ; et
le stockage (1004), par le terminal de communication, d'une indication reçue du réseau non public du groupe de terminaux de communication qui ont accès au réseau non public dans la liste d'identifications dans la mémoire.

10. Procédé selon la revendication 9, comprenant en outre la transmission (1201), par un composant de gestion d'accès (1100) du réseau non public, en réaction à la demande d'enregistrement par le terminal de communication (102, 701, 801, 900, 1104), à un réseau domestique (1103) du terminal de communication situé dans une cellule radio (1105) du réseau non public, d'une demande d'informations indiquant si le terminal de communication appartient à un groupe de terminaux de communication qui ont accès au réseau non public ; et,
si le terminal de communication appartient à un groupe de terminaux de communication qui ont accès au réseau non public, la transmission (1202), par le composant de gestion d'accès du réseau non public, d'une notification au terminal de communication que le terminal de communication appartient à un groupe de terminaux de communication qui ont accès au réseau non public.
